# EUROPEAN PATENT APPLICATION

(11) **EP 3 574 811 A1**
(43) Date of publication of application: **04.12.2019**
(21) Application number: 19174575.1
(22) Date of filing: 15.05.2019
(51) Int. Cl.: A47J 42/38

(54) **APPARATUS FOR LOADING A PORTAFILTER OF AN ESPRESSO COFFEE MACHINE WITH A DOSE OF GROUND COFFEE HAVING A PREDETERMINED WEIGHT AND COMPOSED OF DIFFERENT TYPES OF COFFEE, ACCORDING TO A GIVEN RECIPE**

(30) Priority: 28.05.2018 IT 201800005774
(71) Applicant: Gruppo Cimbali S.p.A., 20082 Binasco (MI) (IT)
(72) Inventor: Abbiati, Giacomo, 20082 Binasco MI (IT)
(74) Representative: Perani & Partners S.p.A.

(57) **Abstract**

An apparatus for loading a portafilter of an espresso coffee machine with a dose of ground coffee having a predetermined weight and composed of a single type of coffee or of a composition of different types of coffee, according to a given recipe.

The apparatus comprises a plurality of hoppers (1, 1a, 1b) each containing a different type of coffee beans. The exhaust pipes (2, 2a,2b) of the hoppers converge into a single collection point (3) associated with a coffee bean weighing device (4) and a coffee bean grinding device (5) that can provide different grinding degrees.

The ground coffee, which may have different particle sizes according to the types of coffee that form the dose, flows into a respective cylindrical container (6, 6a, 6b, 6c) of a loading device (7) having a plurality of containers (6, 6a, 6b, 6c) arranged around a central axis of rotation (A) and a radially and axially open compartment (S), which is designed to allow the passage of the tamper (P) for tamping the dose of ground coffee in the portafilter, when said compartment (S) is moved by an angular displacement of the loader (7) to alignment with the tamper (P) and with the underlying portafilter.

The apparatus comprises a tamper (P) for tamping the ground coffee, which may also provide different tamping degrees for the different amounts of ground coffee that form the dose according to the selected recipe, as the dose is being received in the portafilter.

## Description

The present invention relates to an apparatus for loading a portafilter of an espresso coffee machine with a dose of ground coffee having a predetermined weight and composed of a single type of coffee or of a composition of different types of coffee, according to a given recipe.

Apparatuses for blending coffee beans of different types in different amounts and for later grinding the blend or sending it to a packaging device, are known in the art.

One of these apparatuses is disclosed in US 5 603 458. It comprises a plurality of containers, each containing a different type of coffee beans. The discharge ducts of the containers converge into a single hopper-like collection point, in which the blend is formed.

In the above discussed prior art the discharge duct of each container is equipped with members for blocking the flow of coffee beans in the form of a solenoid valve. The solenoid valves of the discharge ducts are controlled by a control unit such that the opening times will control the amounts of coffee beans flowing from each container into the underlying hopper, thereby creating the composition of the blend.

The latter, when the components are not accurately weighed after grinding, cannot be used as a dose formed according to a particular recipe, to be introduced into a portafilter for preparing an espresso coffee.

Alternatively, volume control is also known to be obtained using an encoder accommodated in the driving motor of an auger which feeds coffee beans in the discharge duct. By this arrangement, a certain number of revolutions of the auger corresponds to a certain amount of coffee beans being dispensed. WO 2016/113258 A1 discloses an apparatus for forming a blend of different types of coffee according to a given recipe or composition, comprising a plurality of containers each containing a given type coffee beans, a coffee bean feeding device which connects each container with a common collection point having a device for weighing the amount of coffee beans received therein. The apparatus disclosed in WO 2016/113258 A1 also includes a grinding device for grinding the amount of coffee beans that have been blended, received and weighed in the common collection point, and a discharge duct for discharging the ground coffee into a portafilter of a machine for preparing a coffee beverage, in addition to unidentified blend tamping and packaging devices, located next to the grinding device.

In modern coffee making, coffee is increasingly required to be dispensed from a single dose of ground coffee, composed according to certain recipes, and placed in a portafilter. Recipes require blends to be formed, for example, with variable proportions of different types of coffee sometimes with the components of the blend arranged in overlapping layers in the portafilter, each with its own grinding particle size and tamping degree.

The object of the present invention is to provide an apparatus that is able to meet modern coffee making requirements in dispensing espresso coffee prepared with ground coffee doses made according to certain composition recipes.

These and other objects, as better explained hereinafter, are fulfilled by an apparatus as defined in the accompanying claim 1.

The invention will be now described in greater detail with reference to a preferred embodiment thereof, given by way of illustration and without limitation, and shown in the annexed drawings, in which:
- Figure 1 shows a schematic perspective view of a hopper-like coffee bean container with its dispensing duct;

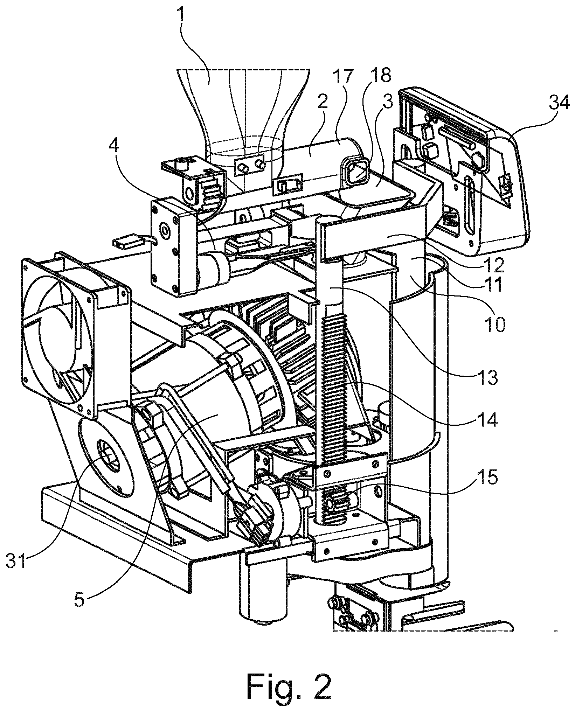

- Figure 2 shows a schematic perspective top rear view of the apparatus of the invention;

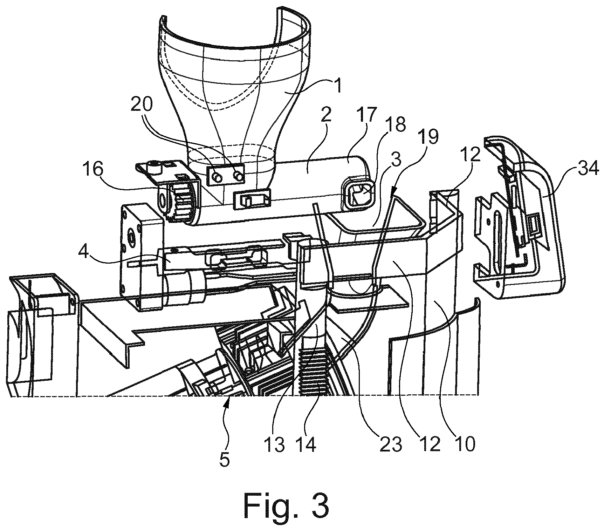

- Figure 3 shows an enlarged upper portion of Figure 2;
- Figure 4 shows a vertically sectional schematic view of the apparatus of the invention;

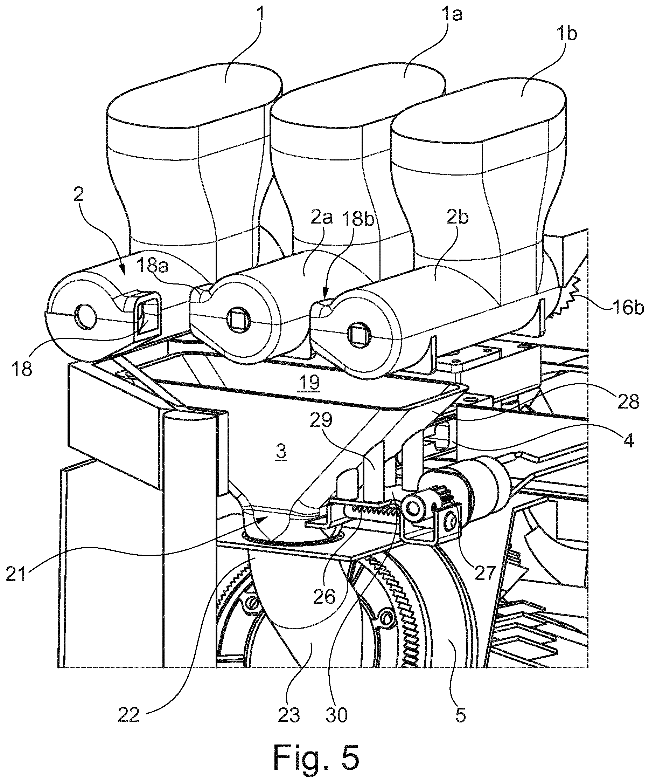

- Figure 5 shows a partial enlarged perspective top view bean blend collection point;

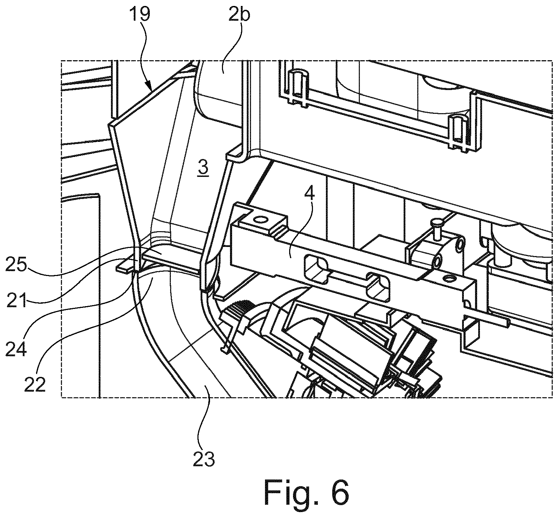

- Figure 6 shows a partially sectional perspective view of the connection area between the bean blend collection and weighing point and the channel toward the grinding chamber of the grinding device of the apparatus;
- Figure 7 shows a schematic perspective top view of the apparatus as viewed from the support of the portafilter and the tamper for ground coffee.

Referring to the above figures, it will be appreciated that the apparatus of the invention comprises a plurality of containers, as hopper-like containers, e.g. three hopper-like containers, like the one referenced 1 in the figures. Each hopper 1, 1a, 1b, is intended to contain a different type of coffee beans. The discharge ducts 2, 2a, 2b of the hoppers converge over a single collection point 3 associated with a coffee bean weighing device 4, e.g. a load cell.

The amount of weighed coffee beans, which may correspond to an entire dose or a portion thereof, according to a predetermined recipe, flows from said collection point 3 to a grinding device, generally referenced 5, which can provide different grinding degrees using a conventional device for adjusting the distance between the grinding wheels.

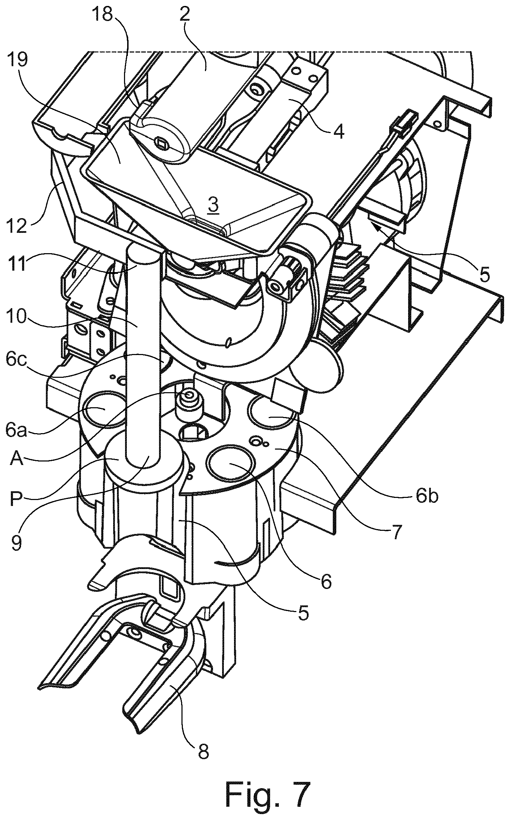

According to the invention, the ground coffee, with its own particle size, flows into a respective cylindrical container 6, 6a, 6b, 6c (Figure 7) of a loader device 7, in which such containers are arranged in a circle around the axis of rotation A of the loader 7 that takes the form of a carousel, with a motor imparting predetermined angular displacements thereto. In addition to the ground coffee containers, the carousel loader 7 also has a radially and axially open compartment S, whose purpose will be apparent from the following description.

Below the loader 7, the apparatus comprises a conventional fork-like support 8 for positioning and supporting the portafilter, not shown, which is designed to receive therein the ground coffee dose contained in one of the cylindrical containers 6 or 6a or 6b or 6c, when, as the loader 7 rotates, the container selected by the program that has been set in the control unit of the apparatus, will be vertically aligned with the portafilter, and the bottom of the container will be opened using conventional mechanisms, not shown, to drop the amount of ground coffee contained therein.

The apparatus also comprises a tamper P for tamping the dose of ground coffee, to impart a predetermined tamping degree to the amount of ground coffee received in the portafilter, when the latter is still engaged with the fork-like support 8.

For this purpose, the tamper P is fixed to the lower end 9 of a rod 10 whose other end 11 is fixed, via a transverse connection 12, to an additional rod 13, which vertically extends parallel to the rod 10 but is located in a different side of the apparatus. A portion of the rod 13 has a rack 14 engaged with a motorized pinion 15.

Then the latter, based on instructions received from the Control Unit (CPU) of the apparatus, will be able to operate the tamper P by vertically moving it toward and away from the portafilter support 8 to apply the desired degree of compression to the dose of ground coffee in the portafilter.

The actuation of the tamper P is controlled and enabled only when the loader 7 has been angularly displaced for the compartment S to be vertically aligned with the rod 10 having the tamper P fixed thereto.

The coordination of the angular displacements of the loader 7 and the actuation of the tamper P may thus provide a different tamping degree for each amount of ground coffee that forms the dose according to a preselected recipe as the dose is being received in the portafilter.

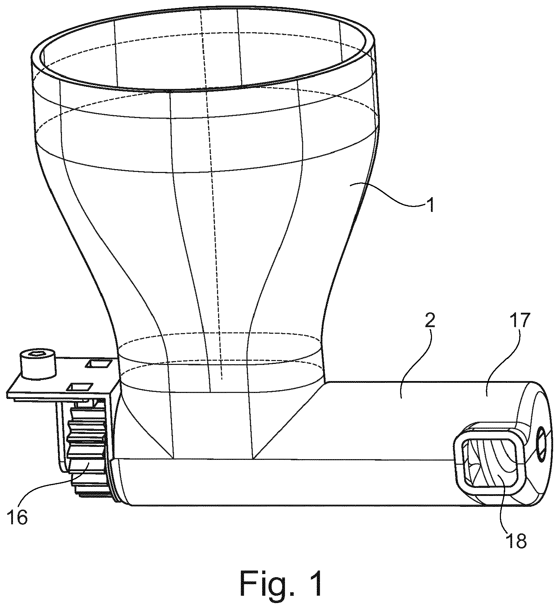

Particularly referring to Figure 1, an auger, not shown, is placed in each discharge duct 2, 2 a, 2b, and is driven by a respective motor, not shown, through a driving gear, referenced 16, located at one end of the auger. Respective openings 18, 18a, 18b are formed at the ends 17, 17a, 17b of the discharge ducts above the mouth 19 of the common collection point 3 for collecting the coffee beans from the hoppers 1, 1a, 1b.

In a particular embodiment, each opening 18, 18a, 18b is equipped with a door, not shown, which elastically swings to oppose a predetermined resistance to the flow of coffee beans from the hopper, thereby maintaining the amount of beans in the duct in compacted form without incurring dose changes.

The amount of coffee beans discharged into the common collection point 3, in which proper weighing is carried out, may be conventionally determined from the actuation time that is set for such auger by the corresponding motor. Alternatively, the amount of coffee may be determined from the number of revolutions of the motor that drives the auger.

In addition, sensors, generally referenced 20, may be preferably but without limitation provided at each hopper 1, 1a, 1b, to detect the presence of coffee in the hopper and control the filling operation with the help of the control unit (CPU) of the apparatus, which is conventionally provided therein, although not shown.

In the particular embodiment of the drawings, this common collection point 3 is shaped as a funnel having a quadrilateral section whose bottom end portion 21 is connected with the mouth 22 of a discharge channel 23 which carries the coffee beans to the grinding device 5.

Particularly, the bottom end portion 21 is spaced apart from the mouth 22 by a short gap 24 inside which may slide plate 25 for closing the bottom of common collection point 3 and keeping it closed for the time required to form the predetermined dose of coffee beans of a single type, or a blend of different types of coffee, and to weigh such dose.

At the end of the weighing operation, the plate 25 is pulled out of the gap 24 by the rack 26 driven by the motorized pinion 27, and determining the opening of the end portion of the bottom 21 of the common collection point 3, thereby allowing the coffee beans to move into the aligned underlying mouth 22 of the discharge channel 23.

It shall be noted that, in order to weight the dose and calculate the tare weight, the plate 25, the rack 26 and its respective motorized pinion 27, are rigidly joined to the wall 28 of the funnel shape of the collection point 3 via a plurality of columns 29 which project out of a plate 30 that supports the rack 26. Particularly, in a preferred mode of operation of the apparatus, the dose of coffee formed in the common collection point 3, is weighed to calibrate the coffee bean dispensing operation of the augers in the individual discharge ducts 17, 17a, 17b from their respective hoppers.

Thus, the single or blended dose requested from the hoppers 1, 1a, 1b by the selected program is directly routed from the common collection point 3 to the channel 23 and from the latter to the grinding device 5, without requiring repeated weighing operations.

However, a new calibration of the dispensing operation from the augers and thus a new weighing operation, may be required when filling the hoppers 1, 1a, 1b with coffee beans from a different package.

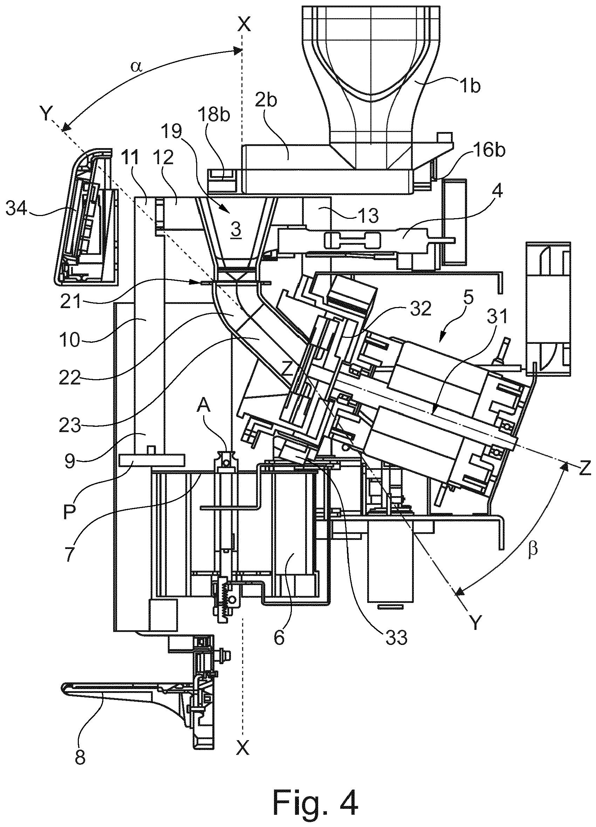

Particularly referring to Figure 4, it will be appreciated that, in the apparatus of the invention, the longitudinal axis Y-Y of the channel that discharges coffee beans from the common coffee bean blend collection point 3 forms an angle α of about 45° with the vertical axis X-X of the funnel shape of the common collection point 3 and an angle β from 0° to about 20° with the axis Z-Z along which the drive shaft 31 of the grinding device 5 lies.

This tilted arrangement of the discharge channel 23 and the drive shaft 31 of the grinding device 5 impart a compact shape to the apparatus of the invention and allow the ground coffee to be discharged from the grinding chamber 32 of the device 5 into a given cylindrical container 6, 6a, 6b or 6c of the carousel loader 7 located at the outlet 33 of the grinding chamber, according to the selected operating program and the composition of the coffee dose that has been formed and weighed in the collection point 3.

The value of the angle β is conveniently selected in view of facilitating gravity discharge of the ground coffee out of the grinding chamber 32.

The provision and calibration of programs enabling the formation of a particular blend for the dose of coffee and the selection of the current operating program of the apparatus are carried out using a conventional keyboard, generally referenced 34 in the drawings.

The operation of the apparatus of the invention clearly appears from the foregoing.

Such apparatus can form doses of ground coffee from a single type of coffee or doses consisting of particular blends of different types of coffee.

Also, a dose consisting of layers of different qualities of coffee, each with its own weight and even with its own tamping degree may be formed in the portafilter.

The invention is susceptible of various embodiments, which are deemed to be equivalent, as they fall within the scope of the claims hereinbelow.

## Claims

1. An apparatus for loading a portafilter of an espresso coffee machine with a dose of ground coffee having a predetermined weight, and composed according to a given recipe, comprising a plurality of containers (1, 1a, 1b) each containing coffee beans of a given type, a coffee bean feeding device (2, 2a, 2b) connecting each container with a common collection point (3) for all the containers, a weighing device (4) for weighing the amount of coffee beans received at said common collection point (3), a grinding device (5) for grinding the weighed amount of coffee beans that come from said common coffee bean collection point (3), a discharge duct (23) that opens out into the grinding chamber (32) of said grinding device (5), a collection device (7) for collecting the amount of ground coffee that comes out of the grinder (5) and introducing it into a portafilter, a tamping device (P) for tamping the amount of ground coffee in the portafilter, as well as motor means (14, 15, 16, 26, 27) and a central processing unit (CPU) for electronically controlling and monitoring said devices, **characterized in that** said collection device (7) comprises a plurality of containers (6, 6a, 6b, 6c) arranged in a circle around the axis of rotation (A), which impart the configuration of a carousel loader to said collection device, as well as a radially and axially open compartment (S).

2. An apparatus as claimed in claim 1, **characterized in that** said coffee bean feeding device connecting each container with a common collection point comprises a duct (2, 2a, 2b) located on the bottom of its respective container (1, 1a, 1b) and extending to said common collection point (3), an auger that is axially mounted in said duct, motor means (16, 16a, 16b) connected to one end of the auger to set the latter into rotation, a coffee bean discharge opening (18, 18a, 18b) formed on said duct at its end facing said common collection point (3).

3. An apparatus as claimed in claims 1 and 2, **characterized in that** said discharge opening (18, 18a, 18b) for discharging the coffee beans from a respective container into the common collection point (3) has a plate-like closing member which is pivotally mounted about an axis, and is subjected to the predetermined action of an elastic member that counteracts the thrust exerted by said auger on the coffee beans that come out through said opening.

4. An apparatus as claimed in one or more of claims 1 to 3, **characterized in that** the amount of coffee beans received at said common collection point (3) consists of coffee beans that come from a single container (1, 1a, 1b) with a relative type of coffee.

5. An apparatus as claimed in one or more of claims 1 to 3, **characterized in that** the amount of coffee beans received at said common collection point (3) consists of a blend of coffee beans that come from at least two containers (1, 1a, 1b) having respective different types of coffee.

6. An apparatus as claimed in any of claims 1 to 5, **characterized in that** said common coffee bean collection point (3) is configured as a frustoconical container with axis (X-X) vertically arranged, is connected to a weighing device (4) and has a discharge opening (21) that can be opened after weighing, said opening (21) being in communication with the inlet (22) of a discharge duct (23) that opens out into the grinding chamber (32) of a grinding device (5).

7. An apparatus as claimed in any of claims 1 to 6, **characterized in that** the longitudinal axis (Y-Y) of said discharge duct (23) for discharging the amount of coffee beans, which opens out into said grinding device (5), forms an angle of 45° with respect the vertical axis (X-X) of said common collection point (3) for collecting the amount of coffee beans to be weighed.

8. An apparatus as claimed in any of claims 1 to 7, **characterized in that** said grinding device is arranged with the axis (Z-Z) of the rotating shaft (31) of the rotating grinding wheel forming an angle of 0° to about 20° with the axis (Y-Y) of said discharge duct (23) for discharging the amount of coffee beans to be ground.

9. An apparatus as claimed in any of claims 1 to 8, **characterized in that** said tamping device (P) is fixed to the lower end (9) of a rod (10) which through motor means (13, 14, 15), based on instructions received from the Control unit (CPU) of the apparatus, drives said tamper (P) toward and away from the portafilter support (8), thereby applying the desired degree of compression on the dose of ground coffee in the portafilter, said displacement of the tamper (P) being only allowed when said carousel loader (7) has been angularly displaced such that the radially and axially open compartment (S) is vertically aligned with said rod (10) having the tamper (P) fixed thereto.
